# EUROPEAN PATENT APPLICATION

(11) **EP 2 407 280 A1**
(43) Date of publication of application: **18.01.2012**
(21) Application number: 10750876.4
(22) Date of filing: 10.03.2010
(51) Int. Cl.: B25G 1/10, B25G 1/00, B29C 45/16

(54) **GRIP, TOOL AND METHOD OF MANUFATURING THEREOF**

(30) Priority: 13.03.2009 JP 2009061304
(71) Applicant: Vessel Industrial Co., Ltd., Osaka-shi Osaka 537-0001 (JP)
(72) Inventor: TAGUCHI, Yasuaki, Osaka-shi Osaka 536-0021 (JP); TAGUCHI, Jiro, Osaka-shi Osaka 536-0021 (JP)
(74) Representative: Hering, Hartmut
(86) International application number: PCT/JP2010/054021
(87) International publication number: WO 2010/104123

(57) **Abstract**

A grip is provided that is capable of applying extraction resistance to a tool shank while being able to be fitted and attached to the tool shank. The grip (1) of the present invention comprises a grip main body (5) surrounding a rear portion (3) including an anti-rotation section (12) of the tool shank (2) and a coating layer (6) covering up surroundings of the grip main body (5) using a softer resin than a resin for the grip main body (5) . An inner layer (4) formed out of same resin as the resin for the coating layer (6) is provided between the grip main body (5) and the rear portion (3) of the tool shank (2). In the grip (1), it is preferable that the inner layer (4) is provided between an outer circumference of a socket (17) provided in the rear portion of the tool shank (2) and the grip main body (5). Furthermore, it is also preferable that the inner layer (4) and the coating layer (6) are formed between a rear end side of the grip main body (5) and a tip end side of the grip main body, and are continuously formed on the tip end side.

## Description

### TECHNICAL FIELD

The present invention relates to a grip such as a driver, a tool, and a method of manufacturing a grip.

### BACKGROUND ART

A grip is provided in a rear portion of a shank of a tool such as a driver so as to facilitate grasping the tool when in use. Such a grip needs to have certain rigidity so as to resist torque transmitted to the shank of the tool ("tool shank") or to resist user' s gripping power when the user grasps the tool. On the other hand, the grip is required to have elasticity so as to eliminate a pressure applied to fingers when the user grasps the grip.

To meet these contradicting requirements, Patent Documents 1 and 2 disclose grips each configured so that a grip main body is formed around a tool shank by injection-molding using a hard resin and so that surroundings of the grip main body are partially covered with a coating layer made of a soft resin.

### PRIOR ART DOCUMENTS

### PATENT DOCUMENTS

Patent Document 1: Japanese Unexamined Patent Publication No. JP-A10-296661
Patent Document 2: Published Unexamined Patent Application based on international application JP-A 8-501026

### DISCLOSURE OF THE INVENTION

### PROBLEMS TO BE SOLVED BY THE INVENTION

Meanwhile, each of tools of the Patent Documents 1 and 2 is structured to make the tool shank difficult to extract from the grip main body (grip) and insert into the grip main body (grip) since the grip main body is formed by hardening surroundings of the tool shank with the hard resin.
However, in relation to a tool, there are demands of replacing an old tool shank with a new one and replacing only a tool shank with another tool shank having an edge of a different shape. Due to this, the conventional tool having the tool shank difficult to extract from the grip and insert into the grip cannot satisfy the above-stated demands.

Furthermore, it is possible to obtain a tool configured, for example, so that a socket that contains a tool shank and which the tool shank can be freely inserted into or extracted from is arranged in a chamber in a die, and so that the socket is buried in a grip main body by injecting a resin into the chamber.
However, such a tool has a merit that the tool shank is easily insertable but has a demerit that the tool shank falls off by some chance. The tool is unfavorable because workability deteriorates in the case where the tool shank easily falls off when, for example, the tool is inclined during operation. That is, a tool is preferably configured to apply appropriate extraction resistance to a tool shank to prevent the tool shank from easily falling off while being insertable and extractable.

The present invention has been made in light of the above-stated problems, and it is an object of the present invention to provide a grip of a tool capable of applying extraction resistance for falling-off prevention to a tool shank while holding the tool shank in insertable and extractable manners.
It is another object of the present invention to provide a tool that enables a tool shank to be easily replaced while a grip is fitted and attached to the tool shank, and that makes it possible to prevent the tool shank from falling off and realize favorable workability.

It is yet another object of the present invention to provide a method of manufacturing a grip capable of manufacturing a grip that can hold a tool shank while being able to be fitted and attached to the tool shank at low cost.

### MEANS ADAPTED TO SOLVE THE PROBLEMS

To attain the objects, the present invention takes the following technical measures.
That is, a grip according to the present invention is a grip of a tool including: a grip main body surrounding a rear portion including an anti-rotation section of a tool shank; and a coating layer covering up surroundings of the grip main body using a softer resin than a resin for the grip main body, wherein an inner layer formed out of the same resin as the resin for the coating layer is provided between the grip main body and the rear portion of the tool shank.

By so constituting, by pushing or pulling the tool shank against or from the grip rather strongly with a force exceeding extraction resistance applied by the inner layer to the tool shank, the tool shank can be extracted from or inserted into the grip and the tool shank can be easily replaced by another tool shank. Besides, there is no probability that the tool shank is inadvertently extracted from the grip and falls off or gets lost since the inner layer applies appropriate extraction resistance to the tool shank inserted into the grip.

Furthermore, in the case where a socket is provided in the rear portion of the tool shank, it is preferable that the inner layer is provided between an outer circumference of the socket and the grip main body.
By so constituting, the inner layer provided between the grip main body and the outer circumference of the socket applies the extraction resistance to the outer circumference of the socket. Therefore, the tool shank along with the socket can be extracted from or inserted into the grip and the tool shank including the socket can be replaced.

It is to be noted that the inner layer and the coating layer may be formed between a rear end side of the grip main body and a tip end side of the grip main body, and that the inner layer and the coating layer may be continuously formed on the tip end side. Alternatively, the inner layer and the coating layer may be formed from the rear end side of the grip main body to a portion between the rear end side of the grip main body and the tip end side of the grip main body. By so constituting, it is possible to appropriately change the extraction resistance applied by the inner layer to the tool shank and increase a tool design variation.

Furthermore, a tool according to the present invention includes the inner layer formed out of the same resin as that for the coating layer between the grip main body and the rear portion of the tool shank as stated above, thereby making it possible to prevent the tool shank from falling off and to realize favorable workability. Moreover, it is preferable that the rear portion of the tool shank is formed into a rectangular shank, formed into a round shank provided with a fin or formed into a round shank provided with the fin, a socket being fitted into the round shank provided with the fin. By so constituting, a rectangular portion of the rectangular shank or a tip end of the fin serves as an anti-rotation section. It is, therefore, possible to ensure that rotary torque of the grip is transmitted to the tool shank.

Moreover, a method of manufacturing a grip according to the present invention includes: inserting a rear portion including an anti-rotation section of a tool shank into a chamber in a die; injecting a first resin from a supply port into the chamber; injecting a second resin harder than the first resin from the supply port into the chamber in a process of injecting the first resin
; forming a coating layer out of the first resin along an inner circumference of the chamber, and forming an inner layer around the rear portion of the tool shank; and forming a grip main body out of the second resin between the coating layer and the inner layer.

By doing so, the second resin is injected to the inside of the first resin previously injected into the chamber, and the first resin and the second resin spread into a space formed between the inner circumference of the chamber and the rear portion of the tool shank with the first resin and the second resin overlapped each other. It is, therefore, possible to simultaneously form the coating layer and the inner layer, form the grip main body between the coating layer and the inner layer at one time, and manufacture the grip that can hold the tool shank in insertable and extractable manners at low cost.

It is to be noted that a method of manufacturing a grip for inserting a tool shank after manufacturing of the grip according to the present invention includes: inserting a liner into a chamber in a die; injecting a first resin from a supply port into the chamber; injecting a second resin harder than the first resin from the supply port into the chamber in a process of injecting the first resin
; forming a coating layer out of the first resin along an inner circumference of the chamber, and forming an inner layer around the liner; and forming a grip main body out of the second resin between the coating layer and the inner layer.

By doing so, the liner is extracted after forming the coating layer, the inner layer, and the grip main body, and a site formed after extraction of the liner can be used as a hole into which the tool shank is inserted.
Moreover, a method of manufacturing a grip for inserting a liner after injecting a resin according to the present invention includes: injecting a first resin from a supply port into a chamber in a die; injecting a second resin harder than the first resin from the supply port into the chamber in a process of injecting the first resin
; forming a coating layer out of the first resin along an inner circumference of the chamber, and forming a grip main body inside of the coating layer; inserting a liner into the chamber while the coating layer is caught up in the chamber before cooling and solidifying the first resin and the second resin filled up in the chamber, and forming an inner layer around the liner; and extracting the liner from the chamber after forming the shank hole, thereby forming a shank hole inside of the inner layer.

At the time of inserting the liner into the chamber as stated above, the first resin and the second resin filled up in the chamber are not completely cooled and solidified. Due to this, by inserting the liner into the chamber so that the coating layer is caught up in the chamber, the inner layer can be easily formed around the liner and the grip in which the inner layer is formed only on the tip end side of the chamber can be easily manufactured.

At the time of manufacturing the grip as stated above, the first resin and the second resin can be caused to flow from a rear end side of the chamber toward a tip end side of the chamber.
By doing so, the rear portion including the anti-rotation section of the tool shank can be surrounded with the inner layer formed out of the softer resin than that for the grip main body.
Furthermore, the first resin can be caused to flow from a rear end side of the chamber toward a portion between the rear end side of the chamber and the tip end side of the chamber , and the second resin can be caused to flow from the rear end side of the chamber toward the tip end side of the chamber.

By doing so, a portion from the rear end side to a portion between the rear end side and the tip end side in the rear portion including the anti-rotation section of the tool shank can be covered with the soft inner layer, and a portion from the portion between the rear end side and the tip end side in the rear portion to the tip end side can be covered with the hard and rigid grip main body. It is thereby possible to ensure transmitting rotary torque of the grip to the tool shank while making it possible to extract or insert the tool shank from or into the grip.

### EFFECTS OF THE INVENTION

The grip according to the present invention can apply the extraction resistance for preventing falling-off to the tool shank while being capable of holding the tool shank in insertable and extractable manners.
Furthermore, according to the tool of the present invention, it is possible to easily replace the tool shank with another one, prevent the tool shank from falling off, and realize favorable workability.
Moreover, according to the method of manufacturing the grip of the present invention, it is possible to manufacture the grip capable of holding the tool shank in insertable and extractable manners at low cost.

### BRIEF DESCRIPTION OF THE DRAWINGS

[Fig. 1] Fig. 1 is a cross-sectional perspective view of a tool with a grip according to a first embodiment.
[Fig. 2] Fig. 2 is a cross-sectional plan view of the tool with the grip according to the first embodiment.
[Fig. 3] Fig. 3 is a cross-sectional view taken along a line B-B of Fig. 2.
[Fig. 4] Fig. 4 is an explanatory diagram showing a method of manufacturing the grip according to the first embodiment.
[Fig. 5] Fig. 5 is a cross-sectional plan view of a tool with a grip according to a second embodiment.
[Fig. 6] Fig. 6 is a cross-sectional view taken along a line C-C of Fig. 5.
[Fig. 7] Fig. 7 is a cross-sectional plan view of a tool with a grip according to a third embodiment.
[Fig. 8] Fig. 8 is a cross-sectional plan view of a tool with a grip according to a fourth embodiment.
[Fig. 9] Fig. 9 is a cross-sectional plan view of a tool with a grip according to a fifth embodiment.
[Fig. 10] Fig. 10 is a cross-sectional view taken along a line D-D of Fig. 9.
[Fig. 11] Fig. 11 is a cross-sectional plan view of a tool with a grip according to a sixth embodiment.
[Fig. 12] Fig. 12 is a cross-sectional plan view of a tool with a grip according to a seventh embodiment.
[Fig. 13] Fig. 13 is a cross-sectional plan view of a grip according to an eighth embodiment.
[Fig. 14] Fig. 14 is an explanatory diagram showing a method of manufacturing the grip according to the eighth embodiment.

### BEST MODE FOR CARRYING OUT THE INVENTION

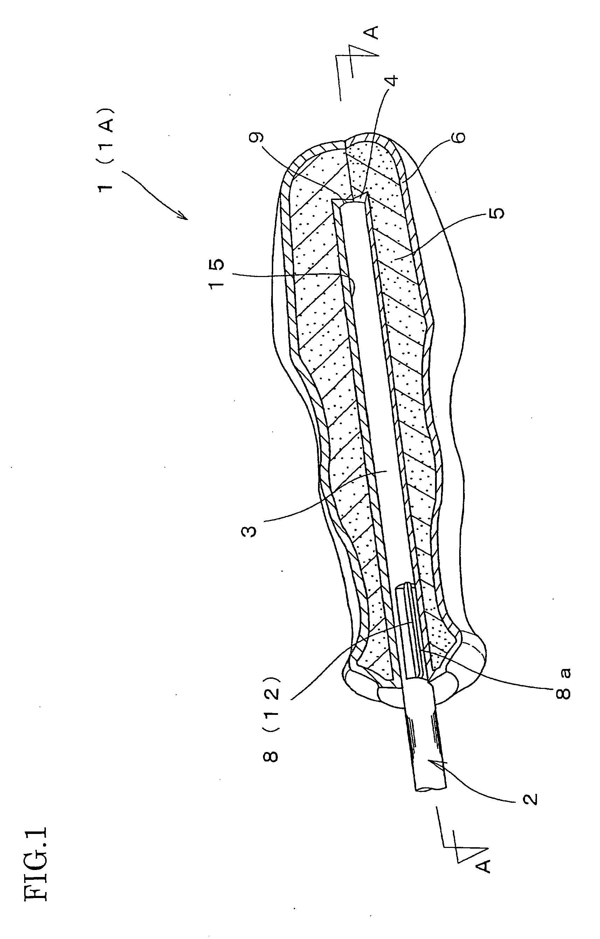

A first embodiment of the present invention will be described hereinafter based on Figs. 1 to 4.
A tool is configured to fit and attach a grip 1 into a rear portion 3 of a tool shank 2. The tool shank 2 is formed out of a round rod material and an edge engageable with a screw or the like is formed on a tip end side of the tool shank 2. The rear portion 3 of the tool shank 2 is also provided with an anti-rotation section 12 preventing the tool shank 2 from rotating relatively to the grip 1, and the anti-rotation section 12 is designed to transmit rotary torque of the grip 1 to the tool shank 2. Fins 8 are formed as the anti-rotation section 12, and a pair of fins 8 is formed radially in the rear portion 3 of the tool shank 2 across a shank center of the tool shank 2. The fins 8 are formed to protrude in the form of plates radially outward from an outer circumference of the rear portion 3 by compression-molding that compresses a part of the outer circumference of the rear portion 3 using a press, and restrict the tool shank 2 from rotating relatively to the grip.

A grip 1A according to the first embodiment is provided in the rear portion 3 of the tool shank 2 and formed into a long and generally spheroidal shape along a direction of the shank center of the tool shank 2. The grip 1A includes an inner layer 4 surrounding the rear portion 3 that includes the fins 8 (anti-rotation sections 12) of the tool shank 2, a grip main body 5 surrounding a circumference of this inner layer 4, and a coating layer 6 covering up a circumference of this grip main body 5.
The coating layer 6 is formed out of a softer resin than a resin forming the grip main body 5, and the inner layer 4 is formed out of the same resin as that forming the coating layer 6. That is, the grip 1A is configured to include the inner layer 4 made of the softer resin than that forming the grip main body 5 between the grip main body 5 and the rear portion 3 of the tool shank 2 in a multilayered fashion.

The grip main body 5 is formed to have an external shape that is a generally elliptic shape similar to the grip 1A according to an external shape of the grip 1A, and formed to be smaller in size than the grip 1A by as much as a thickness of the coating layer 6.
The grip main boy 5 surrounds the inner layer 4 formed according to a shape of the rear portion 3 of the tool shank 2 from outside. That is, the grip man body 5 is formed into a bottomed cylinder open forward and formed further on a rear end side of the grip 1A with respect to the inner layer 4 that surrounds a shank rear end surface 9 of the rear portion 3.

The coating layer 6 entirely covers up an outer circumference, a front end surface, and a rear end surface of the grip main body 5. The coating layer 6 is formed integrally with the inner layer 4 using the same resin, is connected to the inner layer 4 on a tip end side thereof, and surrounds a radially outward side of the grip main body 5 without gap.
The inner layer 4 is formed into a generally cylindrical shape so as to entirely surround an outer circumference, a front end surface, and a rear end surface of the rear portion 3 of the tool shank 2, and also formed on a rear end side of the shank rear end surface 9 of the rear portion 3 so as to be able to entirely surround the shank rear end surface 9 thereof.

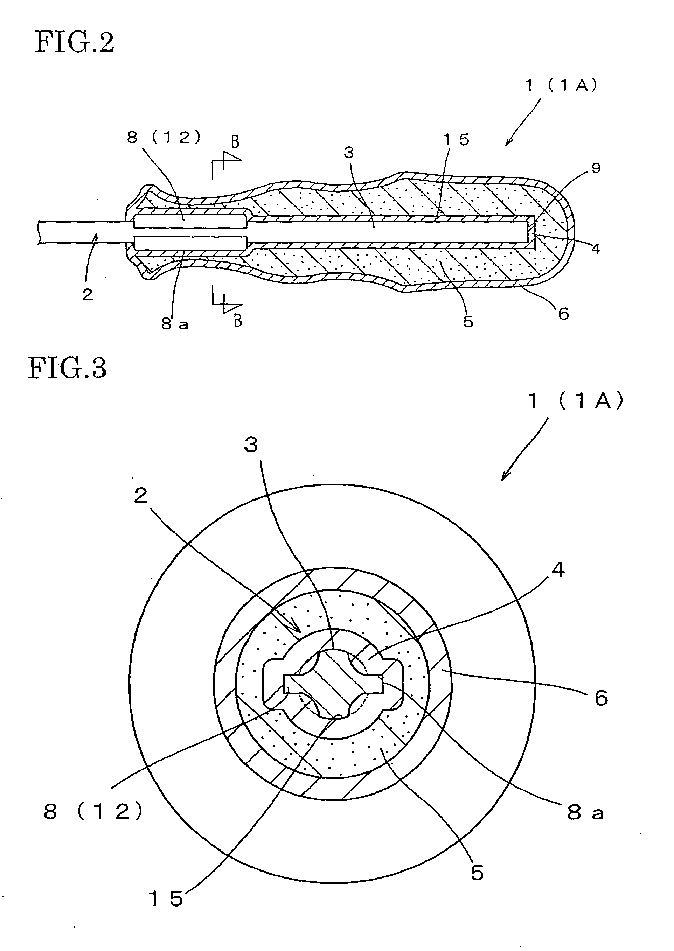

The inner layer 4 of the grip 1A is formed to expand radially outward according to the fins 8 at positions of the tool shank 2 at which the fins 8 are formed, respectively, and surrounds entire surfaces of the fins 8 without gap.
As shown in Fig. 3, the grip main body 5 of the grip 1A is formed out of a hard resin whereas the inner layer 4 and the coating layer 6 thereof are formed out of a soft resin softer than the hard resin constituting the grip main body 5. In other words, the grip 1A is configured so that a member that holds the grip main body 5 between the inner layer 4 and the coating layer 6 is formed into the bottomed cylinder to surround the rear portion 3 of the tool shank 2.

As the soft resin for forming the inner layer 4 and the coating layer 6, silicon rubber, natural rubber, synthetic rubber such as BR or SBR, a polyethylene-based resin, an ionomer-based resin, an ethylene-propylene copolymer, a foamed polyurethane or a synthetic resin that is a mixture of a plurality of resins selected from among the silicon rubber, the natural rubber, the synthetic rubber, the polyethylene-based resin, the ionomer-based resin, the ethylene-propylene copolymer, and the foamed polyurethane is used.
As the soft resin, a synthetic resin having a Shore A hardness (ASTM D2240) of 40 to 60 is preferably used for the following reasons. By using the synthetic resin having a Shore A hardness (ASTM D2240) equal to or higher than 40 as the hard resin, it is possible to prevent occurrence of bleeding. In addition, by using the synthetic resin having a Shore A hardness equal to or lower than 60 as the hard resin, it is possible to lessen burden on user' s fingers when a user uses a tool while grasping the grip 1A.

As the hard resin for forming the grip main body 5, a polypropylene-based resin, a polystyrene resin, an ABS, an acetylene resin, a synthetic resin that is a mixture of a plurality of resins selected from among the polypropylene-based resin, the polystyrene resin, the ABS, and an acetylene resin, or a reclaimed resin containing these resins, each of which resins has a Rockwell hardness (ASTM D785) of 80 to 100. Among these resins, the polypropylene-based resin is particularly preferably used as the hard resin.
Preferably, the synthetic resin having the Rockwell hardness of 80 to 100 is used as the hard resin. By using one of the hard resins having these hardnesses for the grip main body 5, rotary torque generated when the grip 1A is twisted can be transmitted to the tool shank 2 without being reduced even with the inner layer 4 interposed between the rear portion 3 of the tool shank 2 and the grip main body 5.

Furthermore, by using a reclaimed material for the grip main body 5 larger in the amount of the used resin than the inner layer 4 and the coating layer 6, a use rate of the reclaimed material can be enhanced to be equal to or higher than 90 % as compared with a conventional grip for which the use rate of the reclaimed material is less than 10 %, thereby making it possible to lessen a load on the environment. Moreover, even in the case where a reclaimed material that tends to assume a black color because of a mixture of various resins and additives is used for the grip main body 5, grips 1A can be classified by color according to sizes or types by coloring the coating layer 6 since each grip 1A is configured to cover the grip main body 5 with the coating layer 6.

By providing the inner layer 4 made of the soft resin between the grip main body 5 made of the hard resin as stated above and the rear portion 3 of the tool shank 2, the inner layer 4 applies appropriate extraction resistance to the tool shank 2 inserted into the grip 1A. Therefore, there is no probability that the tool shank 2 is inadvertently extracted from the grip 1A and falls off or gets lost. Further, by pushing or pulling the tool shank 2 against or from the grip 1A rather strongly with a force exceeding the extraction resistance applied by the inner layer 4 to the tool shank 2, the tool shank 2 can slide relatively to the grip 1A, can be extracted from or inserted into the grip 1A, and can be easily replaced by another tool shank.

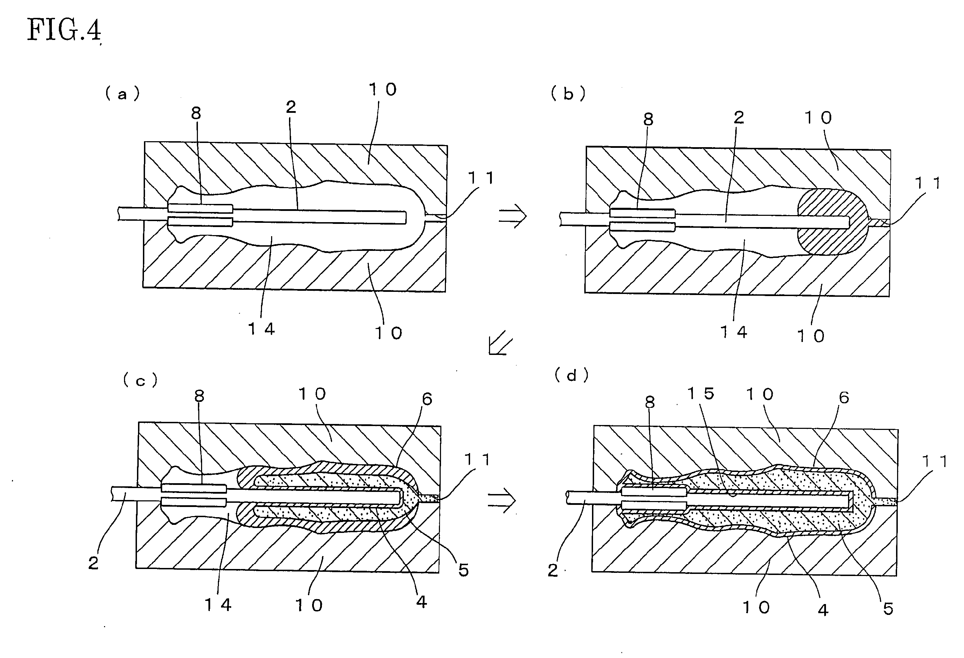

A method of manufacturing the grip 1A according to the first embodiment will next be described.
The method of manufacturing the grip 1A is a two-color injection molding method (mixed color injection molding method) for inserting the rear portion 3 of the tool shank 2 into a chamber 14 in a die 10 and supplying a resin in a molten state into the chamber 14.
As shown in Fig. 4(a), the chamber 14 formed to be hollow according to the external shape of the grip 1A is provided in the die 10. A supply port 11 supplying the molten resin is provided on a rear end side of the chamber 14.

As shown in Fig. 4(b), to mold the grip 1A, a soft resin (first resin) for forming the inner layer 4 and the coating layer 6 is supplied first from the supply port 11 into the chamber 14 while kept in a molten state.
As shown in Fig. 4(c), subsequently to supply of the soft resin, a hard resin (second resin) is supplied from the supply port 11 into the chamber 14 while kept in a molten state. At this moment, the hard resin is supplied to inside of a resin pool of the soft resin already supplied so as to expand the soft resin from inside by the hard resin. By doing so, the soft resin adheres first to an inner circumference of the chamber 14 and an outer surface of the tool shank 2, and the inner layer 4 and the coating layer 6 the tip end side of which is connected to this inner layer 4 are formed.

As shown in Fig. 4(d), by taking out the rear portion 3 of the tool shank 2 from the die 10 after cooling (solidifying) the resins, the soft resin surrounds the inner circumference of the chamber 14 and the outer surface of the tool shank 2 without gap to form the inner layer 4 and the coating layer 6, and the grip main body 5 is formed to be held between the inner layer 4 and the coating layer 6.
In this way, the grip 1A is manufactured by the mixed color molding method for first supplying the soft resin and for continuously supplying the soft resin to the inside of the soft resin. That is, since the hard resin and the soft resin are supplied continuously, there is no need to take time to cool each of the resins after supplying the resin. As a result, it is possible to manufacture the grip 1A formed into multiple layers using different resins at one time (efficiently).

### [SECOND EMBODIMENT]

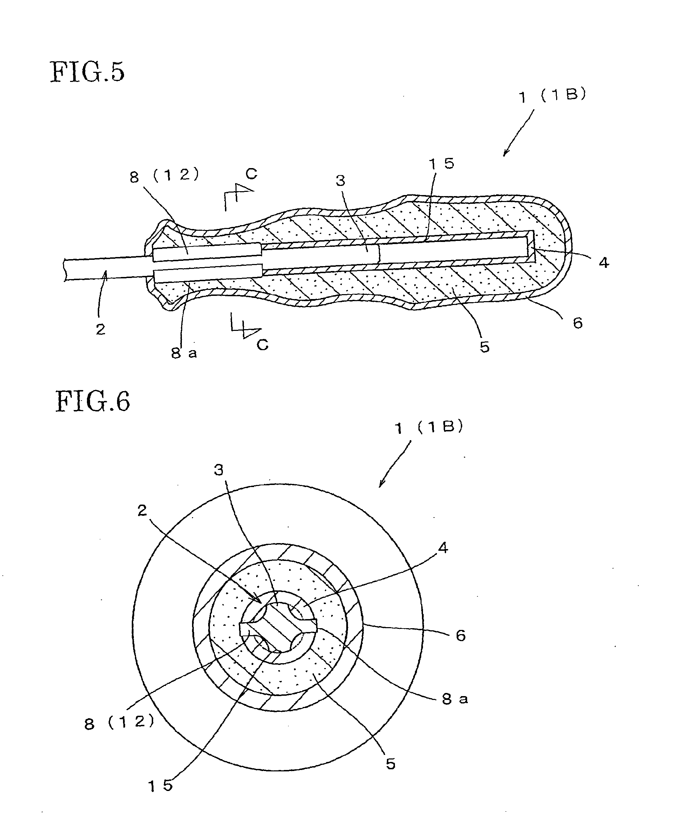

A second embodiment will next be described based on Figs. 5 and 6.

A grip 1B according to the second embodiment includes a straight cylindrical inner layer 4 open forward and configured to insert a rear portion 3 of a tool shank 2 with fins 8 of a tool into the already molded inner layer 4 of the grip 1B from a tip end side of the grip 1B so that the fins 8 penetrate through the inner layer 4 and reach a grip main body 5 when the rear portion 3 of the tool shank 2 with the fins 8 of the tool is inserted from the tip end side. In the grip 1B, the inner layer 4 is formed into the straight cylinder open forward and is not expanded radially outward according to the fins 8 of the tool shank 2 even at positions at which the fins 8 thereof are formed. Furthermore, a rear end of the inner layer 4 is located further on a rear end side of the grip 1B with respect to a rear end surface of the tool shank 2, and a space where a resin and the tool are not provided is formed between the rear end surface of the tool shank 2 and the rear end of the inner layer 4.

Furthermore, tip ends (points 8a) of the fins 8 of the tool shank 2 inserted from the tip end side of the grip 1B penetrate through the inner layer 4 and reach the grip main body 5 formed out of a hard resin, thus generating extraction resistance between the inner layer 4 surrounding the fins 8 and the fins 8.
A manufacturing method according to the second embodiment will next be described.
The grip 1B is manufactured using the die 10 according to the first embodiment as it is. A liner is inserted into a chamber 14 in the die 10 in place of the tool shank 2 with the fins 8. A round rod on which no fins 8 are formed is used as this liner, and arranged into the chamber 14 so that a rear end of the round rod is located on a rear end side of the chamber 14.

Similarly to the first embodiment, a soft resin is supplied first from a supply port 11 into the chamber 14, and a hard resin is supplied from the supply port 11 into the chamber 14 subsequently to supply of the soft resin. At this moment, the hard resin is supplied to inside of a resin pool of the soft resin.
Next, the liner is extracted from the grip 1B formed as stated above. After extracting the liner, a straight cylindrical shank hole 15 open toward the tip end side is formed along a direction of a shank center. The shank tool 2 with the fins 8 to be actually used is inserted into this shank hole 15 from a shank rear end surface 9. Since the tool shank 2 with the fins 8 is formed so that an outside diameter of the tool shank 2 between the points 8a of the fins 8 is larger than an inside diameter of the shank hole 15, cuts are formed on the inner layer 4 by the fins 8 according to insertion of the tool shank 2 and the inner layer 4 surrounding the fins 8 contacts with the fins 8.

Due to this, extraction resistance is generated between the inner layer 4 surrounding the fins 8 and the fins 8 when the inserted tool shank 2 is extracted from the grip 1B.
Moreover, since the points 8a of the fins 8 of the tool shank 2 reach the grip main body 5 made of the hard resin, it is possible to ensure that rotary torque applied to the grip 1B is transmitted to the tool shank 2 without being absorbed by the inner layer 4.

Furthermore, in the case of the grip 1B, various types of tool shanks 2 can be manufactured in free combination with the shank hole 15. Due to this, it is convenient when tools of many types are to be manufactured. Besides, since the liner is used in place of the tool shank 2 in a step that is executed at high temperature because of the resin in the molten state, a metal material without heat resistance (such as a metal material containing a heat-sensitive neodymium magnet) can be used for the tool shank 2, thereby making it possible to easily manufacture tools of various types.

### [THIRD EMBODIMENT]

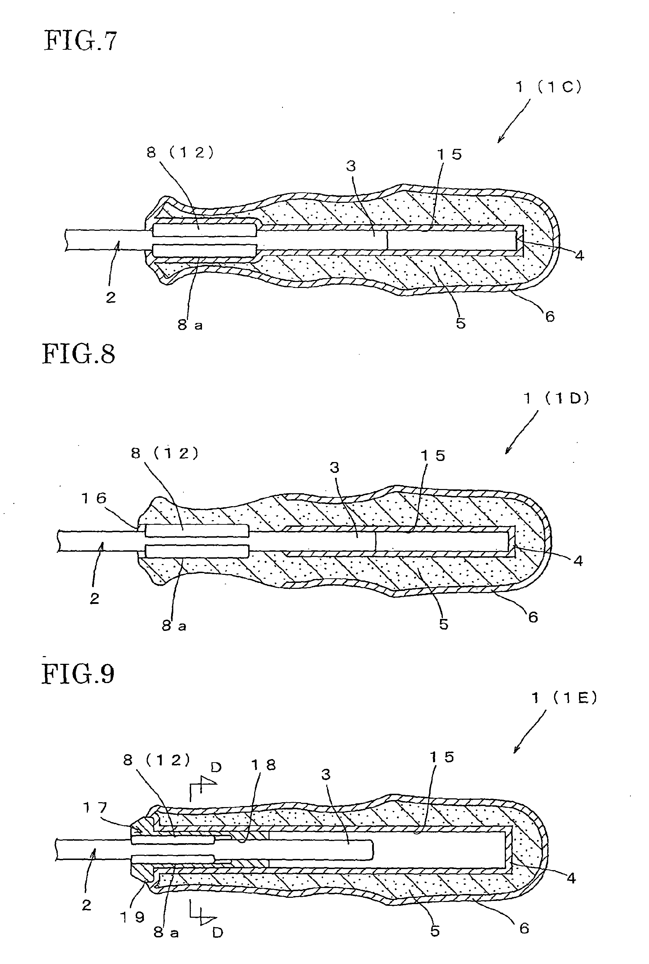

A grip 1C according to a third embodiment will next be described based on Fig. 7.

The grip 1C is manufactured by using the die 10 according to the first embodiment, supplying resins in a state in which a liner in place of a tool shank 2 is inserted into a chamber 14 to mold the grip 1C similarly to the second embodiment, subsequently extracting the liner to form a shank hole 15, and inserting the tool shank 2 into this shank hole 15.
The grip 1C differs from those according to the first and second embodiments in that the liner is a round rod on which fins 8 are formed, and in that the round rod-like tool shank 2 provided with the fins 8 is inserted into the shank hole 15 formed by the liner.

The tool shank 2 is formed to have a smaller shank length than that of the liner, and a rear end surface of this tool shank 2 is located on a tip end side of the grip 1C with respect to a rear end surface of the shank hole 15. Furthermore, by contact only with a tip end side (a part) of an inner layer 4, a rear portion 3 of the tool shank 2 can exhibit extraction resistance.
In the case of the grip 1C, the length of the tool shank 2 that exhibits the extraction resistance by the contact with the inner layer 4 can be changed by changing the length of the tool shank 2, and a magnitude of the extraction resistance acting on the tool shank 2 can be thereby arbitrarily changed.

### [FOURTH EMBODIMENT]

A grip 1D according to a fourth embodiment will next be described based on Fig. 8.

The grip 1D is configured so that an inner layer 4 and a coating layer 6 are not formed between a rear end side of a grip main body 5 and a tip end side thereof but from the rear end side of the grip main body 5 to a portion between the rear end side of the grip main body 5 and the tip end side of the grip main body 5. On the tip end side of the grip 1D, the inner layer 4 is not provided between a rear portion 3 of a tool shank 2 and the grip main body 5 but the grip main body 5 directly contacts with the rear portion 3 that includes anti-rotation sections 12 of the tool shank 2.

That is, only a rear portion side of a shank hole 15 of the grip 1D into which hole the rear portion 3 of the tool shank 2 is inserted is covered with the inner layer 4 and a tip end side thereof is not provided with the inner layer 4. Furthermore, a rear end surface of the tool shank 2 inserted into the grip 1D is located on a tip end side of the grip 1D with respect to a rear end surface of the shank hole 15 similarly to the third embodiment, only a rear end side (part) of the rear portion 3 of the tool shank 2 is covered with the inner layer 4 formed on the rear end side of the shank hole 15, and a tip end side of the rear portion 3 of the tool shank 2 is covered with the grip main body 5 made of a hard resin. Moreover, a fin insertion groove 16 is formed on an inner circumference of the tip end side of the shank hole 15 along a shank center of the tool shank 2, so that the fins 8 of the tool shank 2 can be inserted into the fin insertion groove 16.

A manufacturing method according to the fourth embodiment will next be described as follows.
To mold the grip 1D, a similar die 10 to those used in the first to third embodiments is used, either the tool shank 2 or a liner is arranged in a chamber 14, and a soft resin is supplied from a supply port 11 into the chamber 14. At the time of supplying a hard resin from the supply port 11 into the chamber 14 subsequently to supply of the soft resin, the hard resin is supplied to inside of a resin pool of the soft resin. A supply amount of the soft resin previously supplied is set small whereas that of the hard resin later supplied is set large. By setting the supply amount of the soft resin small as stated above, the resin pool of the soft resin previously supplied is present on a rear end side of the chamber 14, only the hard resin later supplied penetrates through the resin pool and spread toward a tip end side of the chamber 14, and the inner layer 4 and the coating layer 6 can be formed only from the rear end side of the grip main body 5 to a portion between the rear end side of the grip main body 5 and the tip end side of the grip main body 5.

By covering only a part of the rear portion 3 including the fins 8 of the tool shank 2 with the inner layer 4 as stated above, extraction resistance applied by the inner layer 4 to the tool shank 2 can be reduced as compared with an instance of covering the entire rear portion 3 with the inner layer 4. It is also possible to increase a tool design variation by appropriate change of the extraction resistance.

### [FIFTH EMBODIMENT]

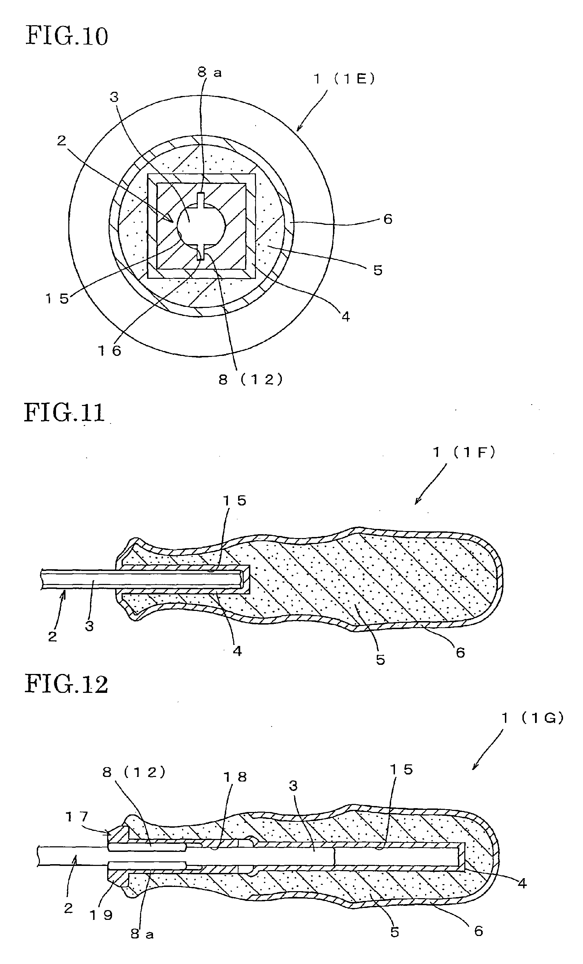

A grip 1E according to a fifth embodiment will next be described based on Figs. 9 and 10.

The grip 1E includes a tool shank 2 that includes a socket 17 in insertable and extractable manners, and an inner layer 4 is provided between an outer circumference of the socket 17 and a grip main body 5.
The socket 17 is formed into a rectangular cylindrical shape and a flange section 19 is formed on a tip end side of the socket 17. An insertion hole 18 into which the tool shank 2 is inserted is formed inside of the socket 17 along a direction of a shank center of the tool shank 2. A fin insertion groove 16 is formed in this insertion hole 18 in parallel to the shank center. By guiding fins 8 along this fin insertion groove 16, a rear portion 3 of the tool shank 2 can be detachably inserted into the insertion hole 18.

Furthermore, an outer circumference of the socket 17 is inserted into a shank hole 15 formed according to an outside diameter of this socket 17. Contact of the outer circumference of the socket 17 with an inner layer 4 enables extraction resistance to act on the tool shank 2 including the socket 17.
By so designing, the inner layer 4 provided between the grip main body 5 and the outer circumference of the socket 17 applies the extraction resistance to the socket 17, so that the tool shank 2 along with the socket 17 can be extracted from or inserted into the grip 1E and that not only the tool shank 2 but also the socket 17 can be replaced. This can further improve convenience of a tool and the grip 1E.

A method of manufacturing the grip 1E will be described as follows.
To manufacture the grip 1E, a liner according to an external shape of a rectangular cylindrical portion of the socket 17 is inserted into a chamber 14 in a die 10 in advance. This liner is formed to have a length ranging from a tip end of the chamber 14 to near a rear end thereof, and formed to be tapered toward the tip end side of the chamber 14 so as to facilitate inserting or extracting the socket 17 later. Similarly to the preceding embodiments, a soft resin and a hard resin are supplied first from a supply port 11 into the chamber 14 and the inner layer 4, the grip main body 5, and a coating layer 6 are formed around the liner. After cooling, the liner is extracted and the tool shank 2 and the socket 17 into which this tool shank 2 is inserted are inserted into the shank hole 15 formed after the liner is extracted.

### [SIXTH EMBODIMENT]

A grip 1F according to a sixth embodiment will next be described based on Fig. 11.

The grip 1F includes a hexagonal cylindrical inner layer 4. A hexagonal rod-like (rectangular shank-like) tool shank 2 is inserted into the inner layer 4 as a tool shank 2. Since the hexagonal cylindrical inner layer 4 covers up every surface of the hexagonal rod-like tool shank 2, constant torque can be transmitted in a rotational direction despite easiness to extract the tool shank 2.
That is, the grip 1F is a grip detachably provided on the rectangular shank-like tool shank 2 corners of which serve as anti-rotation sections 12. Alternatively, this grip 1F can include, for example, a rectangular cylindrical inner layer 4 into which a rectangular rod-like tool shank 2 can be inserted.

### [SEVENTH EMBODIMENT]

A grip 1G according to a seventh embodiment will next be described based on Fig. 12.

The grip 1G includes a tool shank 2 that includes a socket 17 in insertable and extractable manners similarly to the grip 1E according to the fifth embodiment. The grip 1G is configured so that an inner layer 4 and a coating layer 6 are formed between a rear end side and a halfway portion of the grip main body 5, and the inner layer 4 is not provided between the socket 17 and the grip main body 5 on a tip end side of the grip 1G. The halfway portion as stated above means a portion between the rear end side of the grip main body 5 and a tip end side of the grip main body 5. The grip main body 5 is structured to directly contact with an outer circumference of the socket 17.

That is, in the case of the grip 1G, a tip end side of a shank hole 15 is formed into a shape according to an outside diameter of the socket 17 (a rectangular cylindrical portion of the socket 17), and a rear end side of the shank hole 15 is formed into a cylindrical shape smaller in diameter than the tip end side thereof according to an outside diameter of the shank tool 2. The grip 1G is structured so that extraction resistance acts on between the inner layer 4 formed on the rear end side of the shank hole 15 and a rear portion 3 of the tool shank 2 fitted and attached to the socket 17.

In a method of manufacturing the grip 1G, a liner according to an external shape of the rear end side (rectangular cylindrical portion) of the socket 17 is used in place of the round rod-like liner used in the manufacturing method according to the fourth embodiment. That is, a tip end side of the liner for the grip 1G is formed into a shape according to the rectangular cylindrical portion of the socket 17 whereas a rear end side thereof is formed into a cylindrical shape smaller in diameter than the tip end side thereof according to the outside diameter of the tool shank 2.

Furthermore, after producing a molded part using resins similarly to the fourth embodiment, the socket 17 is inserted into the tip end side of the shank hole 15 formed by extracting the liner and the rear portion 3 of the tool shank 2 is inserted into the rear end side of the shank hole 15, thereby making it possible to manufacture the grip 1G.

### [EIGHTH EMBODIMENT]

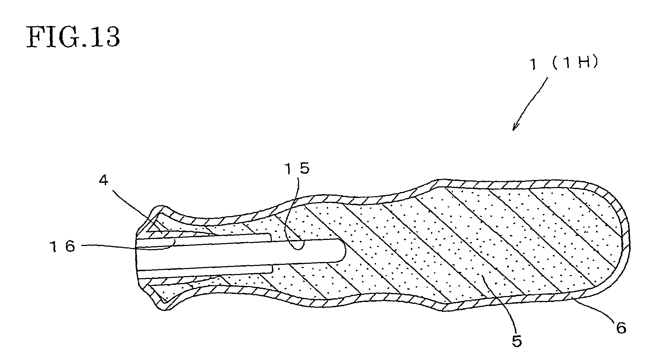

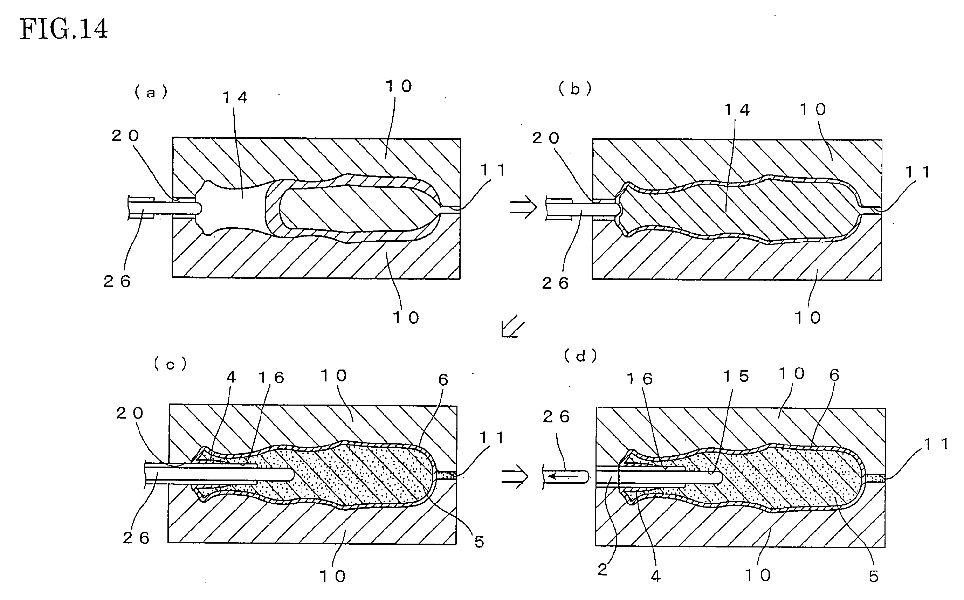

A grip 1H according to an eighth embodiment will next be described based on Figs. 13 and 14.

The grip 1H is a simple body of a grip without a tool shank 2. The grip 1H includes a shank hole 15 open toward a tip end side of the grip 1H. A fin insertion groove 16 is formed from a halfway portion to a tip end side of the shank hole 15 so as to be able to insert a rear portion 3 of the tool shank 2 including fins 8. The halfway portion means a portion between a rear end side of the shank hole 15 and the tip end side of the shank hole 15. An inner layer 4 is formed around the shank hole 15.
While a coating layer 6 is formed over an entire length from a tip end side of a grip main body 5 to a rear end side thereof, the inner layer 4 is formed only on the tip end side of the grip main body 5. The inner layer 4 is connected to the coating layer 6 on the tip end side of the grip main body 5. The inner layer 4 is formed to have a thickness gradually reduced from a tip end side to a rear end side of the inner layer 4, and is not formed from a halfway portion to a rear end side of the fin insertion groove 16. The halfway portion means a portion between the rear end side of the fin insertion groove 16 and a tip end side of the fin insertion groove 16. By forming the inner layer 4 only on the tip end side of the grip main body 5 as stated above, it is possible to reduce extraction resistance generated between the rear portion 3 of the tool shank 2 and the inner layer 4 when the rear portion 3 is inserted. The tool shank 2 can be inserted or extracted without applying a strong force, thereby facilitating replacing the tool shank 2.

A method of manufacturing the grip 1H will next be described.
As shown in Fig. 14(a), to manufacture the grip 1H, a soft resin and a hard resin are sequentially injected from a supply port 11 into a chamber 14 into which a liner 26 is not inserted. A shank insertion section 20 into which the liner 26 with fins 8 is inserted is formed in a die 10 on a tip end side of the chamber 14. At the time of injecting resins, the liner 26 closes this shank insertion section 20, thereby preventing the resins injected into the chamber 14 from leaking to outside of the chamber 14 from the shank insertion unit 20.

As shown in Fig. 14(b), when the chamber 14 is filled with the soft resin and the hard resin, the liner 26 is inserted into the chamber 14 before cooling and solidification of the filled resins begin. At this time, the liner 26 is inserted into the chamber 14 while the coating layer 6 formed on the tip end side of the chamber 14 is caught up in the chamber, and the inner layer 4 is formed out of the same soft resin as that for the coating layer 6 around the liner 26.

As shown in Fig. 14(c), when the liner 26 is inserted into the chamber 14, the inner layer 4 is formed around the liner 26, the fin insertion groove 16 is formed by the fins 8 in the inner layer 4 according to formation of this inner layer 4, and the liner 26 further tears off the inner layer 4 and enters into the grip main body 5.
As shown in Fig. 14(d), when the soft resin and the hard resin begin to be cooled and solidified, the liner 26 is extracted from the chamber 14, thereby forming the shank hole 15 inside of the inner layer 4 and the grip main body 5.

At the time of inserting the liner 26 into the chamber 14 as stated above, the soft resin and the hard resin filled up into the chamber 14 are not completely cooled and solidified. Due to this, by inserting the liner 26 into the chamber 14 so that the coating layer 6 is caught up in the chamber, the inner layer 4 can be easily formed around the liner 26. It is thereby possible to easily manufacture the grip 1H having the inner layer 4 formed only on the tip end side of the chamber 14.

The present invention is not limited to the embodiments stated above but shapes, structures, materials, combinations and the like of the respective members can be appropriately changed in a range in which the spirit of the invention does not change.
While the silicon rubber, the polypropylene-based resin or the like is exemplarily shown as the soft resin or the hard resin, the soft resin or the hard resin is not limited to those stated above. For example, a mixture of a plurality of resins or a reclaimed resin can be used as the soft or hard resin.

Plate-like members formed radially to be paired in the rear portion 3 across the shank center of the tool shank 2 are exemplarily shown as the fins 8 of the tool shank 2. Alternatively, a continual protrusion in a shank direction or a circumferential direction may be used as a fin 8, or three or more fins 8, for example, may be formed.
In the embodiments stated above, it is exemplarily described that the inner layer 4 and the coating layer 6 are formed by injecting two types of resins from the supply port 11 provided on the rear end side of the chamber 14. However, the supply port 11 may be provided on the halfway portion or tip end side of the chamber 14, and the number of supply ports 11 may be either one or two or more and it suffices that two types of resins can be injected from the respective supply ports 11. The halfway portion means a portion between the rear end of the chamber 14 and the tip end side of the chamber 14.

In the embodiments stated above, the grip 1 applying the extraction resistance to the tool shank 2 only using the inner layer 4 is exemplarily shown. Alternatively, stronger extraction resistance can be applied to the tool shank 2 using, for example, a locking tool such as a screw or a bolt penetrating from an outer circumferential side of the coating layer 6 through the grip main body 5 and the inner layer 4 and reaching the tool shank 2.

### DESCRIPTION OF REFERENCE SYMBOLS

- 1: Grip
- 2: Tool shank
- 3: Rear portion
- 4: Inner layer
- 5: Grip main body
- 6: Coating layer
- 8: Fin
- 8a: Point of fin
- 9: Shank rear end surface of tool shank
- 10: Die
- 11: Supply port
- 12: Anti-rotation section
- 14: Chamber
- 15: Shank hole
- 16: Fin insertion groove
- 17: Socket
- 18: Insertion hole
- 19: Flange section
- 20: Shank insertion section

## Claims

1. A grip comprising:
a grip main body surrounding a rear portion including an anti-rotation section of a tool shank; and
a coating layer covering up surroundings of said grip main body using a softer resin than a resin for the grip main body,
wherein an inner layer formed out of same resin as the resin for said coating layer is provided between said grip main body and the rear portion of the tool shank.

2. The grip according to claim 1, wherein
said inner layer is provided between an outer circumference of a socket provided in the rear portion of said tool shank and said grip main body.

3. The grip according to claim 1 or 2, wherein
said inner layer and the coating layer are formed between a rear end side of said grip main body and a tip end side of said grip main body, and the inner layer and the coating layer are continuously formed on the tip end side.

4. The grip according to claim 1 or 2, wherein
said inner layer and the coating layer are formed from a rear end side of said grip main body to a portion between the rear end side of said grip main body and a tip end side of said grip main body.

5. A tool comprising the grip according to any one of claims 1 to 4 provided in a rear portion of a tool shank.

6. The tool according to claim 5, wherein
the rear portion of said tool shank is formed into a rectangular shank, formed into a round shank provided with a fin or formed into a round shank provided with the fin, a socket being fitted into the round shank provided with the fin.

7. A method of manufacturing a grip comprising:
inserting a rear portion including an anti-rotation section of a tool shank into a chamber in a die;
injecting a first resin from a supply port into said chamber;
injecting a second resin harder than the first resin from said supply port into the chamber in a process of injecting said first resin;
forming a coating layer out of said first resin along an inner circumference of the chamber, and forming an inner layer around the rear portion of said tool shank; and
forming a grip main body out of said second resin between the coating layer and the inner layer.

8. A method of manufacturing a grip comprising:
inserting a liner into a chamber in a die;
injecting a first resin from a supply port into said chamber;
injecting a second resin harder than the first resin from said supply port into the chamber in a process of injecting said first resin;
forming a coating layer out of said first resin along an inner circumference of the chamber, and forming an inner layer around said liner; and
forming a grip main body out of said second resin between the coating layer and the inner layer.

9. A method of manufacturing a grip comprising:
injecting a first resin from a supply port into a chamber in a die;
injecting a second resin harder than the first resin from said supply port into the chamber in a process of injecting said first resin;
forming a coating layer out of said first resin along an inner circumference of the chamber, and forming a grip main body inside of said coating layer;
inserting a liner into said chamber while said coating layer is caught up in the chamber before cooling and solidifying the first resin and the second resin filled up in said chamber, and forming an inner layer around said liner; and
extracting said liner from said chamber after forming said inner layer, thereby forming a shank hole inside of said inner layer.

10. The method of manufacturing the grip according to any one of claims 7 to 9, comprising causing said first resin and said second resin to flow from a rear end side of said chamber toward a tip end side of said chamber.

11. The method of manufacturing the grip according to claim 7 or 8, comprising:
causing said first resin to flow from a rear end side of said chamber toward a portion between the rear end side of said chamber and a tip end side of said chamber; and
causing said second resin to flow from the rear end side of said chamber toward the tip end side of said chamber.
